# FASCICULE DE BREVET EUROPEEN

(11) **EP 1 554 199 B1**
(45) Date de publication et mention de la délivrance du brevet: **10.01.2007**
(21) Numéro de dépôt: 03778431.1
(22) Date de dépôt: 21.10.2003
(51) Int. Cl.: B65G 13/12, B60P 1/52

(54) **PLATEAU DE MANUTENTION DE CHARGES MUNI DE ROULEAUX ESCAMOTABLES**
LADEBODEN MIT EINZIEHBAREN ROLLENELEMENTEN
LOAD HANDLING PLATFORM PROVIDED WITH RETRACTABLE ROLLERS

(30) Priorité: 21.10.2002 FR 0213075
(43) Date de publication de la demande: 20.07.2005
(73) Titulaire: Rotobloc Sarl, 25480 Pirey (FR)
(72) Inventeur: MARCELLI, Pierre, F-25660 Laveze (FR)
(74) Mandataire: Nithardt, Roland
(86) Numéro de dépôt international: PCT/FR2003/003126
(87) Numéro de publication internationale: WO 2004/037687

(56) Documents cités:
- EP-A- 0 547 268
- US-A- 3 243 029
- US-A- 4 930 612

## Description

La présente invention concerne un dispositif à roulements pour déplacer une charge dans un plan sensiblement horizontal et un appareil de manutention équipé d'un tel dispositif à roulements, ce dispositif comportant au moins une table sensiblement horizontale sur laquelle sont montés des organes de roulement, au moins une grille recouvrant la table et pourvue d'ouvertures disposées en regard des organes de roulement, la grille définissant une surface d'appui plane apte à porter la charge quand elle est statique et les organes de roulement étant compris dans un plan sensiblement parallèle à la surface et aptes à porter la charge quand elle est en mouvement, des moyens d'actionnement couplés à au moins une de ces structures pour être mobile par rapport à l'autre entre au moins une position basse et une position haute, dans lesquelles la charge est portée soit par la grille, soit par la table, ces moyens d'actionnement étant agencés pour déplacer la structure dite mobile au moins en translation horizontale.

Dans l'industrie, on utilise de manière courante des appareils de manutention, tels que par exemple des chariots élévateurs, des gerbeurs, pour manutentionner des charges importantes. Ces charges importantes sont par exemple des outils pour des machines outils ou des presses utilisées dans le découpage ou l'emboutissage de tôles, des moules ou des matrices utilisés dans l'injection de matières synthétiques, etc. De manière générale, les charges inférieures à 2 tonnes sont transportées sur des appareils de manutention à plateau alors que les charges de 2 à 10 tonnes sont transportées sur des appareils de manutention à fourches. Au-delà de 10 tonnes, les charges sont transportées par des ponts roulants, par exemple.

Afin de pouvoir faciliter le transfert de ces charges dans le plan horizontal de l'appareil de manutention à la machine outil et inversement, les appareils de manutention du commerce sont équipés d'un dispositif à roulements intégré au plateau et agencé pour porter la charge et la déplacer sans friction sur des organes de roulements libres. Les appareils de manutention peuvent également être équipés de bras articulés agencés pour pousser ou tirer cette charge. Le dispositif à roulements comporte généralement une "structure porte-roulements" surmontée d'une "structure porte-charge". La structure porte-charge a pour fonction de porter la charge pendant le roulage de l'appareil de manutention alors que la structure porte-roulements a pour fonction de la porter sans friction afin de pouvoir effectuer son transfert. Le passage de la charge de l'une à l'autre structure et inversement est obtenu par un déplacement relatif d'une structure par rapport à l'autre permettant d'escamoter ou de sortir les organes de roulement de la structure porte-roulements par rapport à la structure porte-charge, ce déplacement relatif étant commandé par des moyens d'actionnement manuels ou automatiques.

Dans les appareils de manutention à plateau, ce mouvement relatif est généralement commandé manuellement à l'aide d'une manette ou d'un levier qui actionne la rotation de mécanismes spécifiques comme par exemple des excentriques ou des systèmes à bielles.

Les mécanismes utilisés dans les dispositifs à roulements actuels assurant le passage de la charge de la "structure porte-charge" à la "structure porte-roulements" et inversement présentent de nombreux inconvénients liés à leur complexité, leur prix de revient et leur encombrement. De plus, certains mécanismes nécessitent une amplitude de mouvement importante, ce qui pénalise le temps nécessaire au transfert de la charge. D'autre part, ces mécanismes ne sont pas prévus pour équiper des appareils de manutention déjà en service.

La publication US 4,930,612 décrit un dispositif selon le préambule de la revendication 1 et dans lequel les organes de roulement sont commandés par un vérin via des rampes inclinées en opposition.

La présente invention vise à pallier ces inconvénients en proposant un dispositif à roulements basé sur une cinématique plus simple, permettant de limiter le nombre des pièces, de réduire le prix de revient de l'ensemble ainsi que son encombrement, et d'équiper aussi bien des appareils de manutention neufs qu'en après-vente.

Dans ce but, l'invention concerne un dispositif à roulements du genre indiqué en préambule, caractérisé en ce que les ouvertures de la grille présentent un profil compatible avec celui des organes de roulement pour former des rampes d'élévation de manière à générer un déplacement vertical de la structure dite mobile simultanément à son déplacement horizontal.

Dans une forme de réalisation préférée, les ouvertures sont constituées de lumières définissant au moins une première zone agencée pour laisser dépasser au moins le sommet des organes de roulement, une seconde zone agencée pour cacher les organes de roulement et une zone intermédiaire agencée pour former en combinaison avec les organes de roulement lesdites rampes d'élévation. La seconde zone des ouvertures peut être agencée pour bloquer les organes de roulements dans lesdites ouvertures de la grille de manière à verrouiller la position de la grille par rapport à la table.

Les organes de roulement peuvent être des billes sphériques ou des galets bi-coniques, la zone intermédiaire des ouvertures ayant alors une forme sensiblement elliptique ou triangulaire et convergente vers la seconde zone. Les première et seconde zones des ouvertures peuvent avoir une dimension transversale comprise respectivement entre 60 et 95% et entre 10 et 45 % du diamètre des organes de roulement.

De préférence, la grille est mobile par rapport à la table portant les organes de roulement qui est fixe, cette grille étant couplée aux moyens d'actionnement.

Dans cette forme de réalisation, les moyens d'actionnement comportent au moins une poignée mobile en translation dans une glissière solidaire de la table et orientée dans une direction sensiblement perpendiculaire au déplacement horizontal de la grille, cette grille comportant une rainure de guidage traversée par la poignée et décalée angulairement par rapport à la glissière de manière à générer le déplacement horizontal de la grille. Ces moyens d'actionnement peuvent comporter au moins un organe de verrouillage agencé pour solidariser la grille à la table au moins dans une de ses positions haute ou basse.

Dans ce but également, l'invention concerne un appareil de manutention à plateau du genre indiqué en préambule, caractérisé en ce qu'il comporte au moins un dispositif à roulements tel que défini ci-dessus.

La présente invention et ses avantages apparaîtront mieux dans la description suivante de plusieurs modes de réalisation donnés à titre d'exemple non limitatif, en référence aux dessins annexés, dans lesquels :

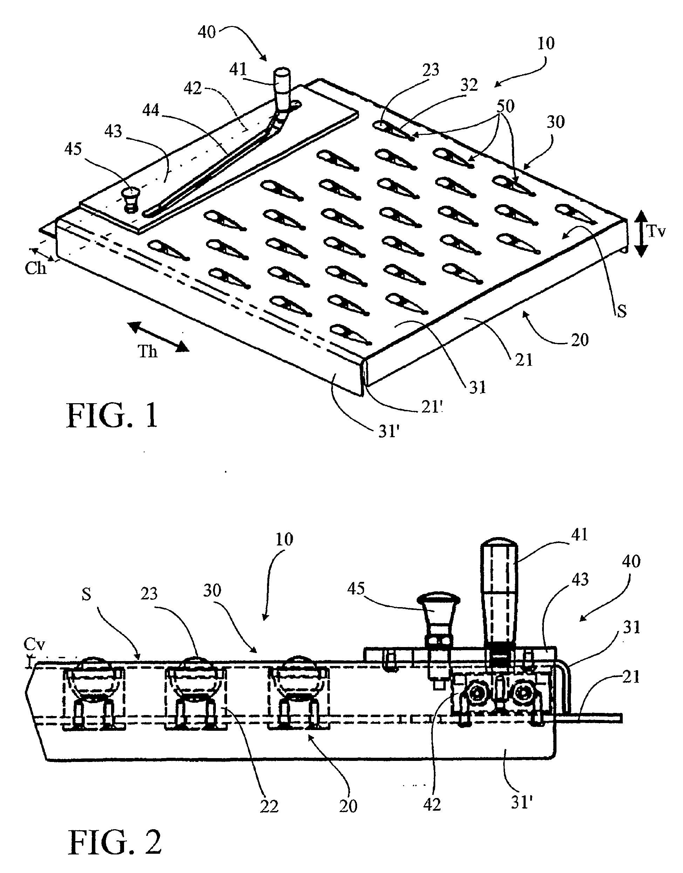

- la figure 1 est une vue en perspective d'un dispositif à roulements selon l'invention sous la forme d'un plateau,
- la figure 2 est une vue partielle de côté du dispositif de la figure 1,
- la figure 3 est un schéma fonctionnel du dispositif de la figure 1,
- la figure 4 est une vue de détail d'un organe de roulement coopérant avec une lumière du dispositif de la figure 1, et
- la figure 5A est une vue similaire à la figure 4 d'une variante de réalisation et la figure 5B illustre l'organe de roulement correspondant.

En référence aux figures, le dispositif à roulements 10 selon l'invention présente une forme de plateau et est destiné à équiper un appareil de manutention classique à plateau (non représenté). Il assure deux fonctions : le maintien statique avec friction des charges 1 lourdes pesant jusqu'à environ 2 tonnes pendant le roulage de l'appareil de manutention et le maintien dynamique de ces charges 1 sans friction pendant leur transfert dans un plan parallèle au plateau. Dans certaines applications, ce dispositif à roulements 10 peut être utilisé seul ou en combinaison avec d'autres équipements.

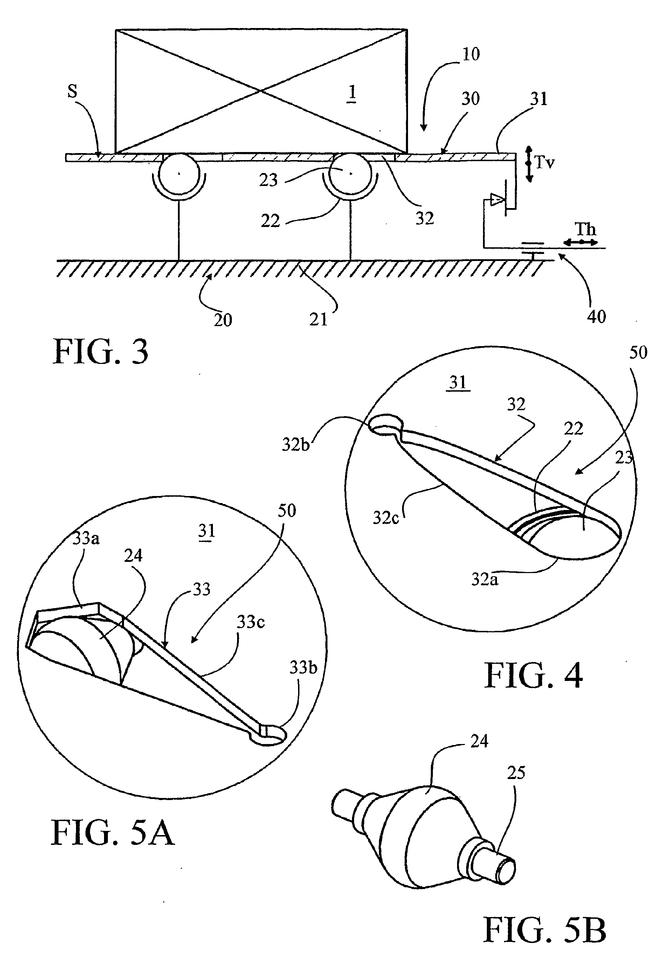

Ce dispositif à roulements 10 comporte une structure porte-roulements 20, comportant des organes de roulement 23, surmontée d'une structure porte-charge 30, présentant une surface d'appui plane S pourvue d'ouvertures 32 laissant apparaître au moins le sommet des organes de roulement 23. Dans cet exemple de réalisation et comme illustré schématiquement par la figure 3, la structure porte-charge 30 est mobile, par rapport à la structure porte-roulements 20 fixe, entre deux positions stables : une position haute dans laquelle elle masque les organes de roulements 23, la charge 1 étant en appui plan sur la surface S de la structure porte-charge 30, et une position basse dans laquelle elle découvre le sommet des organes de roulement 23, la charge 1 étant en appui ponctuel sur ces organes de roulement 23. Bien entendu, la configuration inverse est également envisageable, c'est-à-dire la structure porte-roulements 20 mobile par rapport à la structure porte-charge 30.

La structure porte-charge 30 est couplée à des moyens d'actionnement 40 agencés pour la déplacer en translation horizontale Th d'une course Ch et à des moyens d'élévation 50 agencés pour la déplacer en translation verticale Tv d'une course Cv simultanément à son déplacement horizontal Th, la course Cv étant inférieure à la course Ch. L'originalité du dispositif à roulements 10 de l'invention réside dans le fait que les moyens d'élévation 50 ne sont pas constitués par des mécanismes rapportés, coûteux et complexes, mais sont directement intégrés dans les structures porte-charge 30 et porte-roulements 20. La simultanéité des déplacements verticaux et horizontaux résulte d'un contact roulant entre les ouvertures 32 de la structure porte-charge 30 et les organes de roulements 23 de la structure porte-roulements 20, ces ouvertures 32 et organes de roulement 23 ayant des profils spécifiquement choisis pour former une rampe d'élévation comme expliqué plus loin.

Dans l'exemple représenté, la structure porte-roulements 20 est constituée d'une table 21 destinée à être utilisée en position horizontale, cette table 21 étant rectangulaire et portant des demi-cages à rotule 22 aptes à recevoir des billes 23 formant des rotules axiales. Ces billes 23 constituent les organes de roulements de ce dispositif à roulements 10 et sont réparties uniformément dans un même plan, le sommet de ces billes 23 étant compris dans un plan parallèle à la surface d'appui plane S de la structure porte-charge 30. La table 21 est agencée pour s'adapter en lieu et place ou en superposition du plateau existant d'un appareil de manutention standard.

La structure porte-charge 30 est constituée d'une grille 31 sensiblement rectangulaire superposée à la table 21 et dont les bords longitudinaux 31' sont repliés à angle droit contre les bords 21' de la table 21 formant des guides longitudinaux. Cette grille 31 est mobile librement le long de ces guides longitudinaux en translation horizontale Th et en translation verticale Tv. Elle est associée à des moyens d'actionnement 40 qui sont, dans l'exemple représenté, manuels et constitués d'une poignée 41 disposée suivant un axe perpendiculaire à la surface de la grille 31 et guidée dans une glissière 42 à billes solidaire de la table 21 et orientée perpendiculairement à Th. La grille 31 porte une plaque 43 pourvue d'une rainure de guidage 44 traversée par la poignée 41, cette rainure s'étendant sur la longueur de la glissière 42 entre une première extrémité située en regard de cette glissière 42 et une seconde extrémité écartée de cette glissière 42 d'une distance correspondant à la course Ch de la grille 31. Les moyens d'actionnement 40 comportent également un organe de verrouillage 45 constitué d'un bouton mobile suivant un axe parallèle à la poignée 41 et saillant sous la grille 31 de manière à s'encastrer dans la table 21 et empêcher le déplacement accidentel de la grille 31. Bien entendu, ces moyens d'actionnement 40 peuvent être constitués par tout autre moyen équivalent, comme par exemple un vérin, un système vis-écrou, une genouillère, un levier articulé actionné automatiquement lors de l'accostage de l'appareil de manutention sur la machine outil destinée à recevoir la charge, etc.

Les ouvertures 32 de la grille 31 sont constituées de lumières 32 sensiblement elliptiques, réparties sur toute la surface de la grille 31 et disposées en regard des billes 23. Il y a donc autant de lumières 32 que de billes 23. Elles sont orientées parallèlement au sens du déplacement horizontal Th de la grille 31 et s'étendent sur une longueur sensiblement égale à la course Ch de cette grille 31. En référence à la figure 4, chaque lumière 32 définit au moins une première zone 32a agencée pour découvrir le sommet d'une bille 23, une seconde zone 32b agencée pour masquer la bille 23 et une zone intermédiaire 32c agencée pour former avec la bille 23 les moyens d'élévation 50. La première zone 32a est formée d'un demi-cercle dont le diamètre est compris par exemple entre 60 et 95 % du diamètre des billes 23 de manière à laisser dépasser le sommet de la bille 23 à la surface de la grille 31. La seconde zone 32b est formée d'un cercle presque fermé d'un diamètre inférieure à celui de la première zone 32a et compris par exemple entre 10 et 45 % du diamètre des billes 23 pour les masquer et les bloquer. Cette seconde zone 32b a une fonction complémentaire de verrouillage, le sommet de la bille 23 restant prisonnier dans cette zone. Cette sécurité permet de bloquer la position haute de la grille 31, le retour à sa position basse étant obtenu en manoeuvre la poignée 41 en sens inverse. La zone intermédiaire 32c est sensiblement elliptique et s'étend de la première zone 32a à la seconde zone 32b en se rétrécissant. Les deux bords de cette zone intermédiaire 32c ont donc un profil légèrement courbe et convergeant qui, en combinaison avec le profil sphérique de la bille 23, forment une rampe d'élévation. Les angles d'inclinaison à la fois de cette rampe d'élévation et de la rainure de guidage 44 sont choisis pour démultiplier l'effort de manoeuvre à appliquer sur la poignée 41, qui est par exemple de 20 kg pour soulever une charge de 1 tonne.

La forme des ouvertures 32 et des organes de roulement 23 peut bien entendu varier en fonction du poids de la charge 1. Pour des charges plus lourdes, on choisira par exemple, comme illustré par les figures 5A et 5B, des galets 24 bi-coniques et des lumières 33 sensiblement triangulaires. Les galets 24 sont solidaires d'axes guidés dans des paliers montés sur la table 21. Ces galets 24 bi-coniques ont une partie centrale partiellement sphérique et des côtés tronconiques dont le profil est compatible avec celui des bords en V de la zone intermédiaire 33c des lumières 33. On retrouve les première et seconde zones 33a et 33b, la première zone 33a étant par exemple formée d'un demi hexagone.

Il apparaît clairement que le dispositif à roulements 10 selon l'invention est issu d'une conception et d'une cinématique simples et est de ce fait plus économique aussi bien à l'achat qu'en maintenance, moins encombrant et plus résistant.

Le dispositif à roulements 10 tel que décrit peut être proposé à la vente sous la forme de plateau pour équiper des appareils de manutention déjà en service, soit intégrés de suite dans des appareils de manutention neufs. C'est la raison pour laquelle l'invention concerne également des appareils de manutention (non représenté) équipés d'un tel dispositif à roulements 10.

## Revendications

1. Dispositif à roulements (10) pour déplacer une charge (1) dans un plan sensiblement horizontal, comportant au moins une table (21) sensiblement horizontale sur laquelle sont montés des organes de roulement (23, 24), au moins une grille (31) recouvrant ladite table (21) et pourvue d'ouvertures (32, 33) disposées en regard desdits organes de roulement (23, 24), ladite grille (31) définissant une surface d'appui plane (S) apte à porter ladite charge quand elle est statique et lesdits organes de roulement (23, 24) étant compris dans un plan sensiblement parallèle à ladite surface (S) et aptes à porter ladite charge quand elle est en mouvement, des moyens d'actionnement (40) couplés à au moins une de ces structures (21 ou 31) pour être mobile par rapport à l'autre entre au moins une position basse et une position haute, dans lesquelles la charge est portée soit par la grille (31), soit par la table (21), ces moyens d'actionnement (40) étant agencés pour déplacer la structure dite mobile (21 ou 31) au moins en translation horizontale (Th), **caractérisé en ce que** lesdites ouvertures (32, 33) de ladite grille (31) présentent un profil compatible avec celui desdits organes de roulement (23, 24) pour former des rampes d'élévation de manière à générer un déplacement vertical (Tv) de la structure dite mobile (21 ou 31) simultanément à son déplacement horizontal (Th).

2. Dispositif (10) selon la revendication 1, **caractérisé en ce que** lesdites ouvertures (32, 33) sont constituées de lumières définissant au moins une première zone (32a, 33a) agencée pour laisser dépasser au moins le sommet des organes de roulement (23, 24), une seconde zone (32b, 33b) agencée pour cacher les organes de roulement (23, 24) et une zone intermédiaire (32c, 33c) agencée pour former en combinaison avec les organes de roulement (23, 24) lesdites rampes d'élévation.

3. Dispositif selon la revendication 2, **caractérisé en ce que** la seconde zone (32b, 33b) des ouvertures est agencée pour bloquer les organes de roulements (23, 24) dans lesdites ouvertures (32, 33) de la grille (31) de manière à verrouiller la position de ladite grille (31) par rapport à ladite table (21).

4. Dispositif selon la revendication 2, **caractérisé en ce que** les organes de roulement sont des billes sphériques (23) et la zone intermédiaire (32c) des ouvertures (32) a une forme sensiblement elliptique et convergente vers la seconde zone (32b).

5. Dispositif selon la revendication 2, **caractérisé en ce que** les organes de roulement sont des galets bi-coniques (24) et la zone intermédiaire (33c) des ouvertures (33) a une forme sensiblement triangulaire et convergente vers la seconde zone (33b).

6. Dispositif selon la revendication 4 ou 5, **caractérisé en ce que** les première et seconde zones (32a, 33a, 32b, 33b) des ouvertures (32, 33) ont une dimension transversale comprise respectivement entre 60 et 95% et entre 10 et 45 % du diamètre des organes de roulement (23, 24).

7. Dispositif selon la revendication 2, **caractérisé en ce que** la grille (31) est mobile et couplée auxdits moyens d'actionnement (40) et la table (21) portant les organes de roulement (23, 24) est fixe.

8. Dispositif selon la revendication 7, **caractérisé en ce que** les moyens d'actionnement (40) comportent au moins une poignée (41) mobile en translation dans une glissière (42) solidaire de la table (21) et orientée dans une direction sensiblement perpendiculaire au déplacement horizontal Th de la grille (31), cette grille (31) comportant une rainure de guidage (44) traversée par ladite poignée (41) et décalée angulairement par rapport à la glissière (42) de manière à générer le déplacement horizontal de la grille (31).

9. Dispositif selon la revendication 8, **caractérisé en ce que** lesdits moyens d'actionnement (40) comportent au moins un organe de verrouillage (45) agencé pour solidariser la grille (31) à la table (21) au moins dans une de ses positions haute ou basse.

10. Appareil de manutention à plateau, **caractérisé en ce qu'**il comporte au moins un dispositif à roulements (10) selon l'une quelconque des revendications 1 à 9.

## Claims

1. A roller device (10) for displacing a load (1) in an essentially horizontal plane, comprising at least one essentially horizontal table (21) to which the roller elements (23, 24) are attached, at least one rack (31) covering said table (21) equipped with openings (32, 33) located opposite said roller elements (23, 24), said rack (31) defining a plane contact surface (S) for supporting said load when it is static and said roller elements (23, 24) being located in a plane essentially parallel to said surface (S) and able to support said load when it is moving, actuating means (40) being associated with at least one of said structures (21 or 31) to be movable relative to the other between at least a lower position and an upper position wherein the load is supported either by the rack (31) or by the table (21), said actuating means (40) being designed to displace the structure called the movable structure (21 or 31) at least in horizontal translation (Th), **characterized in that** said openings (32, 33) on the rack (31) have a compatible shape with that of the roller element (23, 24) to form lifting ramps so as to cause the structure called the movable structure (21 or 31) to move in vertical displacement (Tv) simultaneously with its horizontal displacement (Th).

2. A device (10) according to claim 1 **characterized in that** said openings (32, 33) consist of lights defining at least a first zone (32a, 33a) which allows at least the tops of the roller elements (23, 24) to project, a second zone (32b, 33b) for covering the roller elements (23, 24) and an intermediate zone (32c, 33c) which together with roller elements (23, 24) forms the lifting ramps.

3. A device according to claim 2 **characterized in that** the second zone (32b, 33b) with openings is designed to block the roller elements (23, 24) in said openings (32, 33) on the rack (31) in order to lock the position of said rack (31) relative to said table (21).

4. A device according to claim 2 **characterized in that** the roller elements are spherical balls (23) and the intermediate zone (32c) with openings (32) is generally elliptical in shape, converging toward the second zone (32b).

5. A device according to claim 2 **characterized in that** the roller elements are bi-conical rollers (24) and the intermediate zone (33c) with openings (33) is generally triangular in shape, converging toward the second zone (33b).

6. A device according to claims 4 or 5 **characterized in that** the first and second zones (32a, 33a, 32b, 33b) of the openings (32, 33) have transverse dimensions ranging respectively from 60 to 95% and from 10 to 45% of the diameter of the roller elements (23, 24).

7. A device according to claim 2 **characterized in that** the rack (31) is movable and associated with an actuation means (40) and the table (21) supporting the roller elements (23, 24) is fixed.

8. A device according to claim 7 **characterized in that** the actuating means (40) comprises at least one handle (41) moving in translation within a guide block (42) integral with the table (21) and oriented in an essentially perpendicular direction to the direction of horizontal displacement Th by the rack (31), said rack (31) comprising a guide groove (44) traversed by said handle (41) and angularly offset in relation to the guide block (42) so as to generate horizontal displacement of the rack (31).

9. A device according to claim 8 **characterized in that** said actuating means (40) comprises at least one locking element (45) for connecting the rack (31) to the table (21) in at least one raised or lowered position.

10. A load handling platform **characterized in that** it comprises at least one roller device (10) according to any claims 1 to 9.

## Patentansprüche

1. Kugellagervorrichtung (10) zur Verlagerung einer Last (1) auf einer praktisch horizontalen Ebene, die mindestens einen praktisch horizontalen Tisch (21), auf dem Kugellagerelemente (23,24) und mindestens ein den Tisch (21) bedeckendes Gitter (31) angebracht sind, welches mit den Kugellagerelementen (23,24) gegenüberliegenden Öffnungen (32,33) versehen ist, wobei das Gitter (31) eine ebene Auflagefläche (S) festlegt, die zum Tragen der Last in der Lage ist, wenn sie statisch ist, wobei die Kugellagerelemente (23,24) in einer Ebene enthalten sind, die praktisch parallel zu der Oberfläche (S) verläuft, und die zum Tragen der Last in der Lage sind, wenn sie sich in Bewegung befindet, und Betätigungseinrichtungen (40) aufweist, die mit mindestens einer dieser Konstruktionen (21 oder 31) verbunden sind, um im Verhältnis zueinander zwischen mindestens einer unteren Position und einer oberen Position beweglich zu sein, in denen die Last entweder durch das Gitter (31) oder durch den Tisch (21) getragen wird, wobei die Betätigungseinrichtungen (40) zur Verlagerung der besagten beweglichen Konstruktion (21 oder 31) mindestens in Form einer horizontalen Translation (Th) angeordnet sind, **dadurch gekennzeichnet, dass** die Öffnungen (32,33) des Gitters (31) ein Profil darstellen, welches mit demjenigen der Kugellagerelemente (23,24) kompatibel ist, um Hubrampen auszubilden, um eine Vertikalverlagerung (Tv) der beweglichen Konstruktion (21 oder 31) gleichzeitig mit ihrer Horizontalverlagerung (Th) zu erzeugen.

2. Vorrichtung (10) nach Anspruch 1, **dadurch gekennzeichnet, dass** die Öffnungen (32,33) aus Schlitzlöchern bestehen, die mindestens eine erste Zone (32a,33a) festlegen, die angeordnet ist, um mindestens die Spitze der Kugellagerelemente (23,24) vorbeigehen zu lassen, eine zweite Zone (32b,33b), die angeordnet ist, um die Kugellagerelemente (23,24) zu verbergen, und eine Zwischenzone (32c,33c), die angeordnet ist, um in Kombination mit den Kugellagerelementen (23,24) die besagten Hubrampen auszubilden.

3. Vorrichtung nach Anspruch 2, **dadurch gekennzeichnet, dass** die zweite Zone (32b,33b) der Öffnungen angeordnet ist, um die Kugellagerelemente (23,24) so in den Öffnungen (32,33) des Gitters (31) zu blockieren, dass die Position des Gitters (31) im Verhältnis zu dem Tisch (21) arretiert ist.

4. Vorrichtung nach Anspruch 2, **dadurch gekennzeichnet, dass** die Kugellagerelemente sphärische Kugeln (23) sind und die Zwischenzone (32c) der Öffnungen (32) eine praktisch elliptische Form aufweist, die in Richtung der zweiten Zone (32b) konvergiert.

5. Vorrichtung nach Anspruch 2, **dadurch gekennzeichnet, dass** die Kugellagerelemente doppeltkonische Rollen (24) sind und die Zwischenzone (33c) der Öffnungen (33) eine praktisch dreieckige Form aufweist, die in Richtung der zweiten Zone (33b) konvergiert.

6. Vorrichtung nach Anspruch 4 oder 5, **dadurch gekennzeichnet, dass** die ersten und zweiten Zonen (32a,33a,32b,33b) der Öffnungen (32,33) eine Transversalabmessung jeweils einschließlich zwischen 60 und 95% und zwischen 10 und 45% des Durchmessers der Kugellagerelemente (23,24) aufweisen.

7. Vorrichtung nach Anspruch 2, **dadurch gekennzeichnet, dass** das Gitter (31) beweglich und mit den Betätigungseinrichtungen (40) gekoppelt ist und der die Kugellagerelemente (23,24) tragende Tisch (21) fest ist.

8. Vorrichtung nach Anspruch 7, **dadurch gekennzeichnet, dass** die Betätigungseinrichtungen (40) mindestens einen Handgriff (41) umfassen, der in einer fest mit dem Tisch (21) verbundenen Gleitschiene (42) in Form einer Translation bewegbar ist, der in einer praktisch senkrecht zu der Horizontalverlagerung Th des Gitters (31) verlaufenden Richtung ausgerichtet ist, wobei das Gitter (31) eine Führungsnut (44) aufweist, die von dem Handgriff (41) durchquert wird und im Verhältnis zu der Gleitschiene (42) so winklig verschoben ist, dass sie die Horizontalverlagerung des Gitters (31) erzeugt.

9. Vorrichtung nach Anspruch 8, **dadurch gekennzeichnet, dass** die Betätigungseinrichtungen (40) mindestens ein Arretierungselement (45) umfassen, welches zur Befestigung des Gitters (31) an dem Tisch (21) mindestens in seiner oberen oder unteren Position angeordnet ist.

10. Plattenförmige Handhabungsvorrichtung, **dadurch gekennzeichnet, dass** sie mindestens eine Kugellagervorrichtung (10) nach einem beliebigen der Ansprüche 1 bis 9 aufweist.
